# EUROPEAN PATENT APPLICATION

(11) **EP 4 806 691 A1**
(43) Date of publication of application: **16.09.2026**
(21) Application number: 26163381.2
(22) Date of filing: 09.03.2026
(51) Int. Cl.: B60K 15/063, F01N 3/20

(54) **HYDROGEN ENGINE VEHICLE**

(30) Priority: 14.03.2025 JP 2025041214
(71) Applicant: Toyota Jidosha Kabushiki Kaisha, Toyota-shi, Aichi-ken 471-8571 (JP)
(72) Inventor: NAKAGAKI, Atsushi, TOYOTA-SHI, AICHI-KEN, 471-8571 (JP)
(74) Representative: Cabinet Beau de Loménie

(57) **Abstract**

A hydrogen engine vehicle (**10**) equipped with a hydrogen engine (**13**), the hydrogen engine vehicle (**10**) comprising:

a hydrogen inlet (**20**) installed on a side surface of the hydrogen engine vehicle (**10**);

a hydrogen tank (**18**A-**18**D) that is configured to store hydrogen supplied through the hydrogen inlet (**20**);

a urea water inlet (**21**) installed on a side surface of the hydrogen engine vehicle (**10**); and

a urea water tank (**19**) that is configured to store urea water supplied through the urea water inlet (**21**),

wherein the urea water tank (**19**) is installed in a portion between the hydrogen engine (**13**) and the hydrogen tank (**18**A-**18**D) in a vehicle front-rear direction.

## Description

### CROSS-REFERENCE TO RELATED APPLICATIONS

This application is based upon and claims the benefit of priority from Japanese Patent Application No. 2025-041214, filed on March 14, 2025, the entire contents of which are incorporated herein by reference.

### BACKGROUND

### 1. Field

The present disclosure relates to a hydrogen engine vehicle.

### 2. Description of Related Art

JP2023-19927A discloses a hydrogen engine vehicle including a hydrogen tank in a rear portion of the vehicle.

In general, in order to extend the cruising range of a hydrogen engine vehicle, it is necessary to increase the capacity of the hydrogen tank.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a hydrogen engine vehicle equipped with a hydrogen engine includes a hydrogen inlet installed on a side surface of the hydrogen engine vehicle, a hydrogen tank that is configured to store hydrogen supplied through the hydrogen inlet, a urea water inlet installed on a side surface of the hydrogen engine vehicle, and a urea water tank that is configured to store urea water supplied through the urea water inlet. The urea water tank is installed in a portion between the hydrogen engine and the hydrogen tank in a vehicle front-rear direction.

Other features and aspects will be apparent from the following detailed description, the drawings, and the claims.

### BRIEF DESCRIPTION OF THE DRAWINGS

Fig. 1 is a diagram showing an arrangement of components of a hydrogen engine vehicle according to a first embodiment as viewed from below.
Fig. 2 is a diagram showing the arrangement of inlets for hydrogen and urea water as viewed from the left side of the hydrogen engine vehicle of Fig. 1.
Fig. 3 is a diagram showing an arrangement of components of a hydrogen engine vehicle according to a second embodiment configured as a hybrid electric vehicle, as viewed from below.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

In a general hydrogen engine, nitrogen and oxygen in the air react with each other during combustion of hydrogen to produce nitrogen oxides (NOx). To reduce such NOx, a hydrogen engine vehicle including a hydrogen engine may be equipped with a urea selective catalytic reduction (SCR) system for NOx reduction. A hydrogen engine vehicle equipped with a urea SCR system includes a urea water tank, which stores urea water, and urea water piping for delivering urea water from the urea water tank to an exhaust pipe. On the other hand, in order to extend the cruising range of a hydrogen engine vehicle, it is necessary to increase the capacity of the hydrogen tank. However, in a hydrogen engine vehicle equipped with a urea SCR system, installation space for the urea water tank and the urea water piping may restrict a hydrogen tank capacity that can be installed.

The hydrogen engine vehicle according to the present disclosure facilitates mounting of a large-capacity hydrogen tank.

### First Embodiment

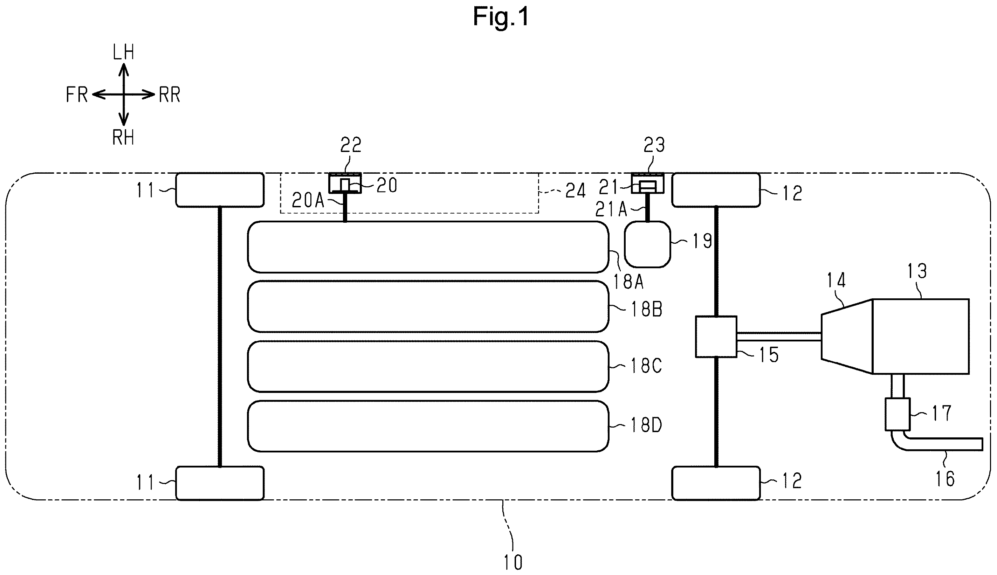

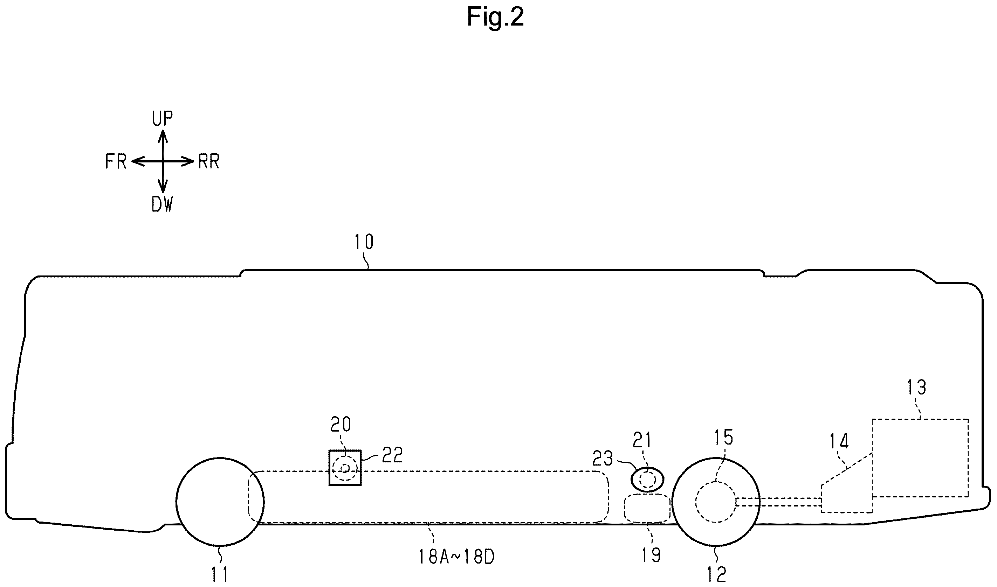

A hydrogen engine vehicle 10 according to a first embodiment will now be described with reference to Figs. 1 and 2. The hydrogen engine vehicle 10 of the present embodiment has a rear-engine layout, in which a hydrogen engine 13 is installed in a rear portion of the vehicle 10. The hydrogen engine vehicle 10 of the present embodiment further employs a rear-wheel-drive configuration in which, among four wheels including left and right front wheels 11 and left and right rear wheels 12, the left and right rear wheels 12 are driven by output of the hydrogen engine 13. In the drawings, arrows indicate directions. Specifically, FR denotes a forward direction of the vehicle 10, RR denotes a rearward direction of the vehicle 10, LH denotes a leftward direction of the vehicle 10, RH denotes a rightward direction of the vehicle 10, UP denotes an upward direction of the vehicle 10, and DW denotes a downward direction of the vehicle 10.

### Configuration of Drivetrain of the Hydrogen Engine Vehicle 10

First, the configuration of a drivetrain of the hydrogen engine vehicle 10 will be described with reference to Fig. 1. Fig. 1 shows the arrangement of components of the drivetrain of the hydrogen engine vehicle 10 as viewed from below.

As shown in Fig. 1, the hydrogen engine 13 is installed in a portion rearward of the rear wheels 12 in the hydrogen engine vehicle 10. The hydrogen engine 13 is coupled to the left and right rear wheels 12 via a transmission 14 and a differential 15. An exhaust pipe 16 of the hydrogen engine 13 is provided with a catalyst device 17 that removes nitrogen oxides in the exhaust gas by selective catalytic reduction using urea as a reducing agent. In the case of the hydrogen engine vehicle 10 of the present embodiment, the exhaust pipe 16 and the catalyst device 17 are installed to the right of the hydrogen engine 13.

### Arrangement of Tanks and Inlets of the Hydrogen Engine Vehicle 10

The hydrogen engine vehicle 10 is provided with a hydrogen inlet 20 and hydrogen tanks 18A through 18D. Hydrogen to be burned in the hydrogen engine 13 is supplied through the hydrogen inlet 20. The hydrogen tanks 18A through 18D store the hydrogen supplied through the hydrogen inlet 20. Further, the hydrogen engine vehicle 10 is provided with a urea water inlet 21 and a urea water tank 19. Urea water to be added to exhaust gas flowing into the catalyst device 17 of the hydrogen engine 13 is supplied through the urea water inlet 21. The urea water tank 19 stores the urea water supplied through the urea water inlet 21. In general, a tank made of resin is used as the urea water tank 19.

Next, the arrangement of the hydrogen tanks 18A through 18D, the urea water tank 19, the hydrogen inlet 20, and the urea water inlet 21 in the hydrogen engine vehicle 10 of the present embodiment will be described with reference to Figs. 1 and 2. Fig. 1 shows the arrangement of the components as viewed from below, and Fig. 2 shows the arrangement of the components as viewed from the left side of the vehicle 10.

The hydrogen engine vehicle 10 of the present embodiment is equipped with the four hydrogen tanks 18A through 18D. The hydrogen tanks 18A through 18D are installed in a portion of an underfloor region of the hydrogen engine vehicle 10 that is rearward of the front wheels 11 and forward of the rear wheels 12. The hydrogen tanks 18A through 18D arranged in the vehicle width direction. As used herein, "underfloor region" refers to a space located below the floor surface of the cabin space of the hydrogen engine vehicle 10, i.e., the space beneath the cabin floor. In the case of the hydrogen engine vehicle 10, the hydrogen inlet 20 is coupled, via a hydrogen inlet pipe 20A, to the leftmost hydrogen tank 18A of the four hydrogen tanks 18A through 18D. The remaining three hydrogen tanks 18B through 18D are configured such that hydrogen is distributed from the hydrogen tank 18A to the hydrogen tanks 18B through 18D.

The urea water tank 19 is disposed in a portion of the underfloor region of the hydrogen engine vehicle 10 that is rearward of the hydrogen tanks 18A through 18D and forward of the axle of the rear wheels 12. The urea water tank 19 is connected to the urea water inlet 21 via a urea water inlet pipe 21A. In the case of the hydrogen engine vehicle 10 of the present embodiment, the urea water tank 19 is installed to the left of the hydrogen engine 13 in the vehicle width direction of the hydrogen engine vehicle 10.

The hydrogen inlet 20 is provided on a side surface of the hydrogen engine vehicle 10. In the case of the hydrogen engine vehicle 10 of the present embodiment, the hydrogen inlet 20 is installed in a portion of the left side surface of the hydrogen engine vehicle 10 that is rearward of the front wheels 11 and forward of the rear wheels 12. The urea water inlet 21 is installed in a portion of the side surface of the hydrogen engine vehicle 10 that is rearward of the hydrogen inlet 20. In the case of the hydrogen engine vehicle 10 of the present embodiment, the urea water inlet 21 is installed in a portion of the left side surface of the hydrogen engine vehicle 10 that is rearward of the front wheels 11 and forward of the rear wheels 12. The hydrogen inlet 20 and the urea water inlet 21 are respectively disposed inward of individual lids 22, 23. The lids 22, 23 are openable lids provided on a side surface of the hydrogen engine vehicle 10.

As shown in Fig. 1, the hydrogen engine vehicle 10 of the present embodiment is provided with a cargo compartment 24 for carrying luggage. The cargo compartment 24 is provided in a portion of the underfloor region of the hydrogen engine vehicle 10 that is rearward of the front wheels 11, forward of the rear wheels 12, and between, in the vehicle width direction, the hydrogen tanks 18A through 18D and the left side surface of the hydrogen engine vehicle 10.

### Operation of the First Embodiment

In the hydrogen engine vehicle 10 of the present embodiment, the hydrogen engine 13 is mounted in a rear portion of the vehicle 10. The hydrogen inlet 20 is provided on the left side surface of the hydrogen engine vehicle 10. Further, the urea water inlet 21 is provided in a portion of the left side surface of the hydrogen engine vehicle 10 that is rearward of the hydrogen inlet 20. The hydrogen tanks 18A through 18D, which store the hydrogen supplied through the hydrogen inlet 20, and the urea water tank 19, which stores urea water supplied through the urea water inlet 21, are installed in the underfloor region of the hydrogen engine vehicle 10. The urea water tank 19 is disposed rearward of the hydrogen tanks 18A through 18D in the hydrogen engine vehicle 10. Further, the urea water tank 19 is installed in a portion of the underfloor region of the cabin of the hydrogen engine vehicle 10 that is to the left of the hydrogen engine 13 in the vehicle width direction. In contrast, the exhaust pipe 16 and the catalyst device 17 are installed to the right of the hydrogen engine 13.

In the case of the hydrogen engine vehicle 10 of the present embodiment, the exhaust pipe 16 and the catalyst device 17 are installed to the right of the hydrogen engine 13. In contrast, the urea water tank 19 is installed to the left of the hydrogen engine 13 in the vehicle width direction of the hydrogen engine vehicle 10. In the following description, a portion to the left the hydrogen engine 13 in the vehicle width direction is referred to as a vehicle left side portion, and a portion to the right of the hydrogen engine 13 is referred to as a vehicle right side portion. As described above, the hydrogen engine vehicle 10 of the present embodiment is configured such that the exhaust pipe 16 and the catalyst device 17 are located in one of the vehicle right side portion and the vehicle left side portion, and the urea water tank 19 is located in the other.

In the present embodiment, of the left and right sides of the vehicle 10, the right side corresponds to a first side, which is a side of the hydrogen engine 13 on which the exhaust pipe 16 and the catalyst device 17 are installed. Further, of the left and right sides of the vehicle 10, the left side corresponds to a second side.

### Advantages of the First Embodiment

The hydrogen engine vehicle 10 of the present embodiment has the following effects.
(1) In the case of the hydrogen engine vehicle 10 of the present embodiment, the urea water tank 19 is installed in a portion between the hydrogen tanks 18A through 18D and the hydrogen engine 13 in the vehicle front-rear direction. By contrast, if the hydrogen tanks 18A through 18D were installed between the urea water tank 19 and the hydrogen engine 13 in the vehicle front-rear direction, piping for supplying urea water from the urea water tank 19 to the hydrogen engine 13 would extend through a region in which the hydrogen tanks 18A through 18D are installed, potentially restricting the available installation space for the hydrogen tanks 18A through 18D. However, in the case of the hydrogen engine 13 of the present embodiment, the urea water tank 19 is disposed closer to the hydrogen engine 13 than the hydrogen tanks 18A through 18D are. Therefore, it is possible to avoid a reduction in the installation space for the hydrogen tanks 18A through 18D attributable to the urea water piping. As described above, the hydrogen engine vehicle 10 of the present embodiment facilitates the mounting of large-capacity hydrogen tanks 18A through 18D.
(2) When urea water is transported through the vicinity of the hydrogen tanks 18A through 18D, which store low-temperature hydrogen, the urea water may be cooled. Accordingly, the piping may require countermeasures such as thermal insulation and heat retention. In the case of the hydrogen engine vehicle 10 of the present embodiment, the urea water tank 19 is closer to the hydrogen engine 13 than the hydrogen tanks 18A through 18D are. This configuration limits an increase in component cost for thermal insulation and heat retention of piping and the like used to convey the urea water.
(3) The positional relationship in the vehicle front-rear direction between the hydrogen inlet and the urea water inlet is the same as the positional relationship in the vehicle front-rear direction between the tanks for storing hydrogen/urea water supplied through the inlets. In addition, the urea water inlet 21 is installed on the side surface on the side close to the urea water tank 19 of the lateral side surfaces of the hydrogen engine vehicle 10. This configuration allows the lengths of the hydrogen inlet pipe 20A and the urea water inlet pipe 21A to be reduced. The shorter the lengths of the inlet pipes, the smaller the space occupied by the inlet pipes in the underfloor space of the cabin becomes. This allows a larger more installation space to be allocated to the hydrogen tanks 18A through 18D. As described above, the hydrogen engine vehicle 10 of the present embodiment facilitates the mounting of large-capacity hydrogen tanks 18A through 18D.
(4) Of the four hydrogen tanks 18A through 18D, the hydrogen tank 18A directly connected to the hydrogen inlet 20 via the hydrogen inlet pipe 20A is installed near the left side surface of the hydrogen engine vehicle 10, where the hydrogen inlet 20 is installed. This configuration also allows the length of the hydrogen inlet pipe 20A to be shortened, thereby further increasing the installation space for the hydrogen tanks 18A through 18D.
(5) While the exhaust pipe 16 and the catalyst device 17 are installed to right of the hydrogen engine 13, the urea water tank 19 is installed to left of the hydrogen engine 13 in the vehicle width direction of the hydrogen engine vehicle 10. The urea water tank 19 is disposed at a position away from the exhaust pipe 16 and the catalyst device 17, which are heat source components of the hydrogen engine vehicle 10. This configuration suppresses deterioration of the urea water tank 19 due to thermal damage.
(6) The cargo compartment 24 for carrying luggage is provided in a portion of the underfloor region of the hydrogen engine vehicle 10 that is rearward of the front wheels 11, forward of the rear wheels 12, and between, in the vehicle width direction, the hydrogen tanks 18A through 18D and the left side surface of the hydrogen engine vehicle 10. The cargo compartment 24 serves as a crush space, thereby reducing impact transmitted to the hydrogen tanks 18A through 18D during a side collision.
(7) The hydrogen tanks 18A through 18D are installed rearward of the front wheels 11 and forward of the rear wheels 12. This configuration reduces impact transmitted to the hydrogen tanks 18A through 18D during a frontal collision and during a rear collision of the hydrogen engine vehicle 10.

### Second Embodiment

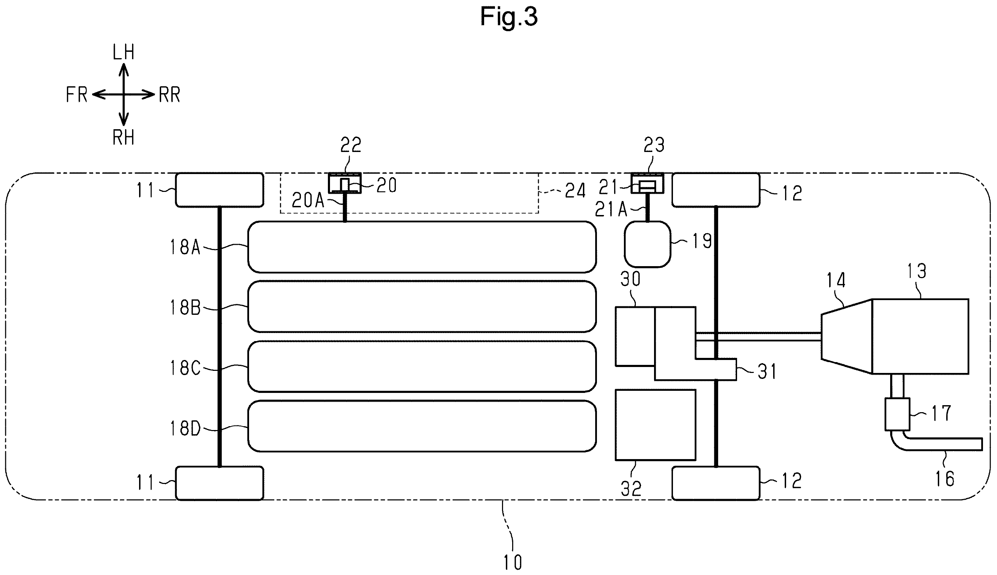

Next, a hydrogen engine vehicle 10 according to a second embodiment will be described with reference to Fig. 3. In the present embodiment, like or the same reference numerals are given to those components that are like or the same as the corresponding components of the above-described embodiments, and the detailed description will be omitted.

Fig. 3 shows an arrangement of components of the hydrogen engine vehicle 10 of the present embodiment as viewed from below. The hydrogen engine vehicle 10 of the present embodiment is configured as a hybrid electric vehicle that includes the hydrogen engine 13 and a motor 30, which generates driving force in response to power supply from a battery 32. The hydrogen engine vehicle 10 of the present embodiment has the same configuration as that of the first embodiment except for the drivetrain.

As shown in Fig. 3, in the case of the hydrogen engine vehicle 10 of the present embodiment, the hydrogen engine 13 is coupled to the left and right rear wheels 12 via the transmission 14 and the transfer case 31. The motor 30 is installed forward of the transfer case 31. The motor 30 is coupled to the left and right rear wheels 12 via the transfer case 31. Further, the hydrogen engine vehicle 10 is equipped with a battery 32 for storing electric power to be supplied to the motor 30. The battery 32 is disposed to the right of the motor 30. As described above, in the hydrogen engine vehicle 10 of the present embodiment, the motor 30 and the battery 32 are arranged side by side in the vehicle width direction in a portion of the underfloor region of the cabin that is located rearward of the hydrogen tanks 18A through 18D and forward of the hydrogen engine 13. Further, in the hydrogen engine vehicle 10 of the present embodiment, the battery 32 is installed in a portion closer to the right side surface than to the left side surface, on which the urea water inlet 21 is installed.

### Advantages of the Second Embodiment

In addition to the above-described advantages (1) to (7), the hydrogen engine vehicle 10 of the present embodiment has the following advantages.

(8) In the hydrogen engine vehicle 10 of the present embodiment, the battery 32 is installed together with the urea water tank 19 in a position rearward of the hydrogen tanks 18A through 18D. Of the lateral side surfaces of the hydrogen engine vehicle 10, the urea water tank 19 is installed in a portion near the right side surface, on which the urea water inlet 21 is installed, and the battery 32 is installed in a portion near the left side surface, on which the urea water inlet 21 is not installed. Accordingly, the hydrogen tanks 18A through 18D, the urea water tank 19, and the battery 32 can be efficiently installed in the underfloor region of the cabin.

(9) The battery 32 is installed rearward of the front wheels 11 and forward of the rear wheels 12. This configuration reduces impact transmitted to the battery 32 during a frontal collision and a rear collision of the hydrogen engine vehicle 10.

(10) The battery 32 and the motor 30 are disposed side by side in the vehicle width direction in the underfloor region. Since the battery 32 and the motor 30 are close to each other, they can be connected by a short cable. Accordingly, procurement cost and weight of the cable can be reduced, and cable routing is facilitated.

### Other Embodiments

The above-described embodiments may be modified as follows. The above-described embodiments and the following modifications can be combined as long as the combined modifications remain technically consistent with each other.

The arrangement of the drivetrain such as the motor 30 in the hydrogen engine vehicle 10 according to the second embodiment may be different from that shown in Fig. 3. For example, the hydrogen engine vehicle 10 may be configured such that the motor 30 is disposed in the front portion of the vehicle 10, the front wheels 11 are driven by the motor 30, and the rear wheels 12 are driven only by the hydrogen engine 13.

The arrangement of the battery 32 may be different from that shown in Fig. 3.

In the case of the hydrogen engine vehicle 10 of the above-described embodiment, the cargo compartment 24 is provided in a portion of the underfloor region of the cabin that is on the vehicle left side. However, the cargo compartment 24 may be provided in a portion on the vehicle right side. Alternatively, the cargo compartments 24 may be provided on each of the vehicle left side and the vehicle right side. Further, the hydrogen engine vehicle 10 may be configured without the underfloor cargo compartment 24.

The number of the hydrogen tanks 18A through 18D may be changed, or the direction of arrangement may be changed.

The urea water inlet 21 may be provided on the right side surface of the hydrogen engine vehicle 10. In that case, it is desirable that the urea water tank 19 be disposed, of the lateral side surfaces of the hydrogen engine vehicle 10, in a portion closer to the right side surface, on which the urea water inlet 21 is provided, than to the left side surface, on which the urea water inlet 21 is not provided.

The exhaust pipe 16 and the catalyst device 17 may be installed to the left of the hydrogen engine 13, and the urea water inlet 21 may be installed on the right side surface of the hydrogen engine vehicle 10. In this case as well, the length of the urea water inlet pipe 21A can be shortened by installing the urea water tank 19 in a portion closer to the right side surface of the hydrogen engine vehicle 10, on which the urea water inlet 21 is installed, than to the left side surface. In this case, the left side of the vehicle 10 corresponds to the first side, and the right side of the vehicle 10 corresponds to the second side.

When one of the vehicle left side and the vehicle right side is defined as a first side and the other is defined as a second side, the exhaust pipe 16 and the catalyst device 17 may be installed on the first side of the hydrogen engine 13, and the urea water inlet 21 may be installed on the side surface on the first side of the lateral side surfaces of the hydrogen engine vehicle 10. In this case, the exhaust pipe 16 and the catalyst device 17, and the urea water tank 19 are disposed on the same side in the vehicle width direction of the hydrogen engine vehicle 10. Even in such a case, the thermal damage on the urea water tank 19 due to heat radiation from the exhaust pipe 16 and the catalyst device 17 is suppressed, for example, in the following cases (A) to (C). (A) A heat shield is disposed between the urea water tank 19 and both the exhaust pipe 16 and the catalyst device 17 of the hydrogen engine 13. (B) The urea water tank 19 is sufficiently distant from the exhaust pipe 16 and the catalyst device 17 of the hydrogen engine 13 in the vehicle front-rear direction. (C) The urea water tank 19 is made of a heat-resistant material.

The hydrogen inlet 20 and the urea water inlet 21 may be provided inward of the same lid.

The hydrogen inlet 20 and the urea water inlet 21 may be installed on different side surfaces of the hydrogen engine vehicle 10.

Arrangement of the Hydrogen tanks 18A through 18D and the Urea Water Tank 19

As long as the urea water tank 19 is disposed between the hydrogen tanks 18A through 18D and the hydrogen engine 13 in the vehicle front-rear direction, the arrangement of the hydrogen tanks 18A through 18D and the urea water tank 19 may be changed. For example, a part of the urea water tank 19 may be disposed so as to overlap with the hydrogen tanks 18A through 18D in the vehicle front-rear direction.

The hydrogen engine vehicle 10 may be configured as a vehicle employing a front-engine layout, in which the hydrogen engine 13 is disposed in a front portion of the vehicle. Also in this case, the advantages (1) and (2) can be obtained by disposing the urea water tank 19 in a portion between the hydrogen tanks 18A through 18D and the hydrogen engine 13 in the vehicle front-rear direction. In this case, the urea water tank 19 is disposed in a portion located rearward of the hydrogen engine 13 and forward of the hydrogen tanks 18A through 18D in the hydrogen engine vehicle 10.

As used herein, the phrase "the urea water tank 19 is installed in a portion rearward of the hydrogen tanks 18A through 18D" means a state that satisfies both of the following conditions (A1) and (A2). (A1) The rear end of the urea water tank 19 is located rearward of the rear ends of the hydrogen tanks 18A through 18D. (A2) The front end of the urea water tank 19 is located rearward of the front ends of the hydrogen tanks 18A through 18D. In contrast, the phrase "the urea water tank 19 is installed in a portion forward of the hydrogen tanks 18A through 18D" means a state that satisfies both of the following conditions (B1) and (B2). (B1) The rear end of the urea water tank 19 is located forward of the rear ends of the hydrogen tanks 18A through 18D. (B2) The front end of the urea water tank 19 is located forward of the front ends of the hydrogen tanks 18A through 18D. In any case, the urea water tank 19 may be disposed in a position where the urea water tank 19 does not overlap with the hydrogen tanks 18A through 18D in the vehicle width direction.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hydrogen engine vehicle (10) equipped with a hydrogen engine (13), the hydrogen engine vehicle (10) comprising:
a hydrogen inlet (20) installed on a side surface of the hydrogen engine vehicle (10);
a hydrogen tank (18A-18D) that is configured to store hydrogen supplied through the hydrogen inlet (20);
a urea water inlet (21) installed on a side surface of the hydrogen engine vehicle (10); and
a urea water tank (19) that is configured to store urea water supplied through the urea water inlet (21),
wherein the urea water tank (19) is installed in a portion between the hydrogen engine (13) and the hydrogen tank (18A-18D) in a vehicle front-rear direction.

2. The hydrogen engine vehicle (10) according to claim 1, wherein the urea water tank (19) is installed in a portion closer to, of lateral side surfaces of the hydrogen engine vehicle (10), the side surface on which the urea water inlet (21) is provided than to a side surface on which the urea water inlet (21) is not installed.

3. The hydrogen engine vehicle (10) according to claim 1 or 2, wherein the hydrogen engine (13) is installed in a rear portion of the hydrogen engine vehicle (10).

4. The hydrogen engine vehicle (10) according to any one of claims 1 to 3, further comprising a catalyst device (17) connected to the hydrogen engine (13), wherein
the catalyst device (17) is configured to purify exhaust gas through selective catalytic reduction using urea water supplied from the urea water tank (19), and
when one of a left side and a right side of the vehicle (10) is defined as a first side and the other is defined as a second side, an exhaust pipe (16) and the catalyst device (17) are installed on the first side of the hydrogen engine (13), and the urea water inlet (21) is installed on a side surface on the second side of the hydrogen engine vehicle (10).

5. The hydrogen engine vehicle (10) according to any one of claims 1 to 4, further comprising a cargo compartment (24) in which luggage is carried, the cargo compartment (24) being provided rearward of a front wheel (11) of the hydrogen engine vehicle (10), forward of a rear wheel (12) of the hydrogen engine vehicle (10), and in a portion of an underfloor region between a side surface of the hydrogen engine vehicle (10) and the hydrogen tank (18A-18D) in a vehicle width direction.

6. The hydrogen engine vehicle (10) according to any one of claims 1 to 5, further comprising a battery (32), wherein the battery (32) is installed in a portion that is between the hydrogen tank (18A-18D) and the hydrogen engine (13) in the vehicle front-rear direction, the portion being closer to, of lateral side surfaces of the hydrogen engine vehicle (10), the side surface on which the urea water inlet (21) is not provided than to a side surface on which the urea water inlet (21) is installed.

7. The hydrogen engine vehicle (10) according to claim 6, further comprising a motor for generating a driving force of the hydrogen engine vehicle (10) by power supply from the battery (32), the battery (32) and the motor being arranged side by side in a vehicle width direction.
